# EUROPEAN PATENT APPLICATION

(11) **EP 2 782 306 A1**
(43) Date of publication of application: **24.09.2014**
(21) Application number: 11875607.1
(22) Date of filing: 18.11.2011
(51) Int. Cl.: H04L 27/26

(54) **METHOD AND DEVICE FOR ENHANCING SYNCHRONIZATION IN HETEROGENEOUS NETWORK**

(71) Applicant: Fujitsu Limited, Kawasaki-shi, Kanagawa 211-8588 (JP)
(72) Inventor: ZHANG, Yi, Beijing 100025 (CN); ZHANG, Yuantao, Beijing 100025 (CN); LI, Hongchao, Beijing 100025 (CN); WANG, Yi, Beijing 100025 (CN); ZHOU, Hua, Beijing 100025 (CN)
(74) Representative: Schultes, Stephan
(86) International application number: PCT/CN2011/082393
(87) International publication number: WO 2013/071509

(57) **Abstract**

Embodiments of the present invention provide a method and apparatus for enhancing synchronization in a heterogeneous network. The method includes: transmitting an auxiliary synchronization signal by a base station in a pico cell, a transmission interval of the auxiliary synchronization signal being 10ms or 5ms, and the auxiliary synchronization signal being located in a 0^{th} subframe and/or a 5^{th} subframe of each transmission frame; and notifying by the base station to user equipment in a cell range extension (CRE) region to detect the auxiliary synchronization signal, so that the user equipment performs symbol synchronization and frame synchronization in accordance with the auxiliary synchronization signal in accessing to the pico cell. With the method of the present invention in which high-layer signaling indication and a auxiliary synchronization signal are combined, user equipment in a CRE region of the pico cell may obtain synchronization, thereby not only ensuring compatibility but also satisfying requirements of the system performance with a relatively low time frequency resource overhead.

## Description

### Technical Field

The present invention relates to the field of communications, and in particular to a method and apparatus for enhancing synchronization in a heterogeneous network.

### Background Art

A long-term evolution (LTE) scheme of 3GPP (third generation partnership project) follows a conventional homogeneous network, which consists of a hexagonal cellular system. For further increasing the capacity of the system, a heterogeneous network is introduced into a long-term evolution-advanced (LTE-A) scheme of a next generation wireless communication. An LTE-A system consists of a macro cell, a femto cell, a pico cell, a remote radio head, and a relay. It not only is improved with respect to the system capacity by being deployed with new radio nodes, but also provides better services to users in special regions, thereby optimizing the system performance. In order to further increase a multiplexing gain of a cell, in a process of cell selection, a larger offset value is used in the cell selection. It ensures that more users of a macro cell are served by a pico cell, and the system capacity is improved by multiplexing time frequency resources by different cells. And on the other hand, as a user in a cell range expansion (CRE) region of the pico cell is subjected relatively much interference, an enhancement interference coordination technology is needed to guarantee reliable transmission of the user in the CRE region.

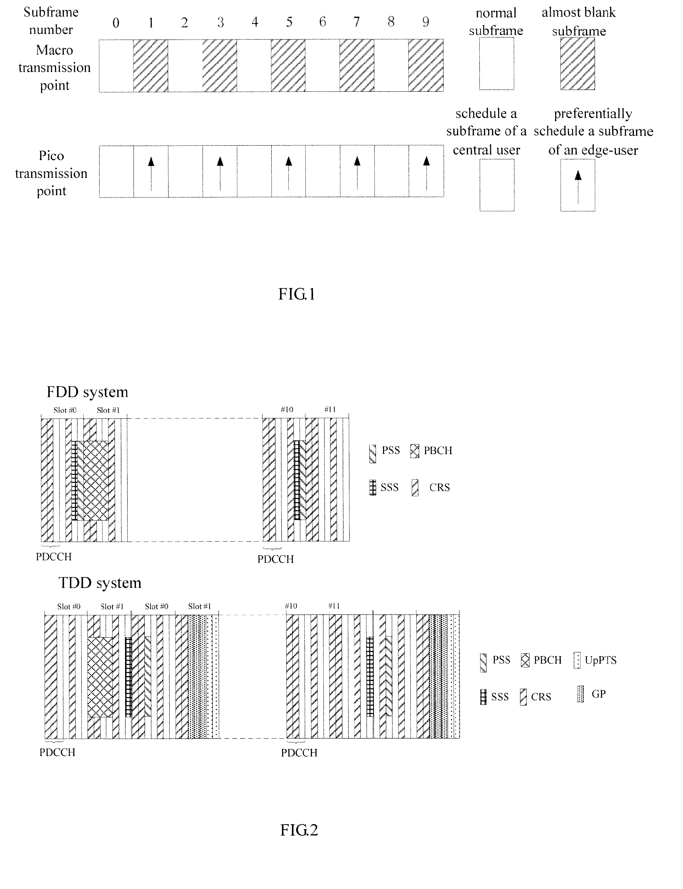

An almost blank subframe (ABS) scheme may be used to reduce interference of a macro cell to the information transmission of a pico cell, and an example is given in Fig. 1. Wherein, the first, third, 5^{th}, 7^{th} and 9^{th} subframes are emptied in the macro cell, the pico cell may preferentially schedule an edge-user for transmission in subframes corresponding to the emptied subframes in the macro cell, and schedule a central user for transmission in other subframes. With the above technology, a user of the pico cell is capable of transmitting reliably. This ensures the multiplexing of a central user of a cell, and the system capacity is increased relative to a conventional homogeneous network. However, in an ABS, a CRS (cell-specific reference signal)/PBCH (physical broadcast channel)/PSS (primary synchronization signal)/SSS (secondary synchronization signal)/CSI-RS (channel state information reference signal)/SIB1 (system information block 1)/paging information still need to be transmitted, which brings interference to a pico cell. When the enhancement interference coordination technology is not used or only an ABS technology is used, synchronization channels of a macro cell and a pico cell will be overlapped, resulting in mutual interference. Hence, a problem exists in the synchronization of the user in the CRE region of the pico cell, and there is a need to propose an enhanced interference coordination method and apparatus to realize reliable synchronization and reliable transmission of system information.

Currently, in order to deal with the problem of interference of PBCH/PSS/SSS, a subframe translation scheme is proposed for an FDD (frequency division duplexing) system. Its main idea is to stagger PBCH/PSS/SSSs of the macro cell and the pico cell by subframe translation, and the macro cell does not transmit data information in a resource to which the PBCH/PSS/SSS of the pico cell correspond, so as to reduce interference to the PBCH/PSS/SSS of the pico cell. It may be carried out in the following two manners: (1) subframes where the PBCH/PSS/SSS of the pico cell are located corresponding to an ABS of the macro cell, and being not 0^{th} and 5^{th} subframes of the macro cell; and (2) resources where the PBCH/PSS/SSS of the pico cell are located corresponding to a non-ABS of the macro cell, and a resource to which the macro cell corresponds being made not to transmit information by punching. Although both of the manners are able to solve the problem of the interference of a synchronization channel of an FDD system, as a TDD (time division duplexing) system needs to maintain system synchronization, the subframe translation scheme can't be applicable. For a standard, a general method for an FDD system and a TDD system is more concise, which may reduce workload of standardization, and hence is more attractive.

In the implementation of the present invention, the inventors found that another synchronization method has been proposed. In this method, a user in a CRE region of a pico cell first detects a synchronization channel of a macro cell, which is able to access to the macro cell. The macro cell transmits system information, such as system bandwidth information transmitted in a PBCH, information on a system frame number, information on a duration of a PHICH and a resource occupied by it, information on the number of used antenna ports, information on a type of a cyclic prefix, and information on cell identity, etc., to the user in the CRE region of the pico cell. Then, the user in the CRE region accessing to the macro cell is handed over to the pico cell. After handover, the user in the CRE region can obtain part of synchronization information without detecting a PBCH/PSS/SSS. Such a method is applicable to an FDD system and a TDD system; however, the problem of symbol synchronization and subframe synchronization is still unsolved.

It should be noted that the above description of the background art is merely provided for clear and complete explanation of the present invention and for easy understanding by those skilled in the art. And it should not be understood that the above technical solution is known to those skilled in the art as it is described in the background art of the present invention.

### Summary of the Invention

An object of the embodiments of the present invention is to provide a method and apparatus for enhancing synchronization in a heterogeneous network, so that a user in a CRE region of a pico cell obtains synchronization with a method in which high-layer signaling indication and an auxiliary synchronization signal are combined.

According to one aspect of the embodiments of the present invention, there is provided a method for enhancing synchronization in a heterogeneous network, including:
transmitting an auxiliary synchronization signal by a base station in a pico cell, a transmission interval of the auxiliary synchronization signal being 10ms or 5ms, and the auxiliary synchronization signal being located in a 0^{th} subframe and/or a 5^{th} subframe of each transmission frame; and
notifying by the base station to user equipment in a cell range extension (CRE) region to detect the auxiliary synchronization signal, so that the user equipment performs symbol synchronization and frame synchronization in accordance with the auxiliary synchronization signal in accessing to the pico cell.

According to another aspect of the embodiments of the present invention, there is provided a method for enhancing synchronization in a heterogeneous network, including:
handing over to a pico cell by user equipment in accordance with related information of the pico cell transmitted by a macro cell;
detecting, by the user equipment, an auxiliary synchronization signal transmitted by the pico cell, in accordance with a notification message transmitted by the pico cell, a transmission interval of the auxiliary synchronization signal being 10ms or 5ms, and the auxiliary synchronization signal being located in a 0^{th} subframe and/or a 5^{th} subframe of each transmission frame; and
performing symbol synchronization and frame synchronization by the user equipment in accordance with the auxiliary synchronization signal transmitted by the pico cell.

According to still another aspect of the embodiments of the present invention, there is provided a base station, including:
a transmitting unit configured to transmit an auxiliary synchronization signal, a transmission interval of the auxiliary synchronization signal being 10ms or 5ms, and the auxiliary synchronization signal being located in a 0^{th} subframe and/or a 5^{th} subframe of each transmission frame; and
a notifying unit configured to notify user equipment in a cell range extension (CRE) region to detect the auxiliary synchronization signal, so that the user equipment performs symbol synchronization and frame synchronization in accordance with the auxiliary synchronization signal in accessing to the pico cell.

According to still another aspect of the embodiments of the present invention, there is provided user equipment, including:
a handover unit configured to hand over the user equipment to a pico cell in accordance with related information of the pico cell transmitted by a macro cell;
a detecting unit configured to detect an auxiliary synchronization signal transmitted by the pico cell, in accordance with a notification message transmitted by the pico cell, a transmission interval of the auxiliary synchronization signal being 10ms or 5ms, and the auxiliary synchronization signal being located in a 0^{th} subframe and/or a 5^{th} subframe of each transmission frame; and
a synchronizing unit configured to perform symbol synchronization and frame synchronization in accordance with the auxiliary synchronization signal transmitted by the pico cell.

According to still another aspect of the embodiments of the present invention, there is provided a computer-readable program, wherein when the program is executed in a base station, the program enables a computer to carry out the method for enhancing synchronization in a heterogeneous network executed by a base station as described above in the base station.

According to still another aspect of the embodiments of the present invention, there is provided a storage medium in which a computer-readable program is stored, wherein the computer-readable program enables a computer to carry out the method for enhancing synchronization in a heterogeneous network executed by a base station as described above in a base station.

According to still another aspect of the embodiments of the present invention, there is provided a computer-readable program, wherein when the program is executed in user equipment, the program enables a computer to carry out the method for enhancing synchronization in a heterogeneous network executed by terminal equipment as described above in the user equipment.

According to still another aspect of the embodiments of the present invention, there is provided a storage medium in which a computer-readable program is stored, wherein the computer-readable program enables a computer to carry out the method for enhancing synchronization in a heterogeneous network executed by terminal equipment as described above in user equipment.

The advantage of the embodiments of the present invention resides in that with the method in which high-layer signaling indication and an auxiliary synchronization signal are combined, user equipment in a CRE region of a pico cell may obtain synchronization, thereby not only ensuring compatibility but also satisfying requirements of the system performance with a relatively low time frequency resource overhead.

With reference to the following description and drawings, the particular embodiments of the present invention are disclosed in detail, and the principle of the present invention and the manners of use are indicated. It should be understood that the scope of the embodiments of the present invention is not limited thereto. The embodiments of the present invention contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "includes/including" when used in this specification is taken to specify the presence of stated features, integers, steps or components but does not preclude the presence or addition of one or more other features, integers, steps, components or groups thereof.

### Brief Description of the Drawings

Many aspects of the invention can be better understood with reference to the following drawings. The components in the drawings are not necessarily to scale, emphasis instead being placed upon clearly illustrating the principles of the present invention. To facilitate illustrating and describing some parts of the invention, corresponding portions of the drawings may be exaggerated or reduced in size. Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiment. In the drawings:
Figure 1 is a schematic diagram of an ABS scheme;
Figure 2 is a schematic diagram of a transmission location of a synchronization channel of an LTE system;
Figure 3 is a schematic diagram of a macro-pico scenario;
Figure 4 is a flowchart of a method for enhancing synchronization in a heterogeneous network of an embodiment of the present invention;
Figure 5 is a schematic diagram of a transmission location of an auxiliary synchronization signal with a transmission interval being 10ms in an FDD system;
Figure 6 is a schematic diagram of an example of an auxiliary synchronization signal with a transmission interval being 5ms in an FDD system;
Figure 7 is a schematic diagram of another example of an auxiliary synchronization signal with a transmission interval being 5ms in an FDD system;
Figure 8 is a schematic diagram of another example of an auxiliary synchronization signal with a transmission interval being 5ms general to an FDD system and a TDD system;
Figure 9 is a flowchart of a method for enhancing synchronization in a heterogeneous network of another embodiment of the present invention;
Figure 10 is a schematic diagram of the structure of a base station of an embodiment of the present invention; and
Figure 11 is a schematic diagram of the structure of user equipment of an embodiment of the present invention.

### Detailed Description of the Invention

Foregoing and other features of the embodiments of the present invention will become apparent with reference to the drawings and the following description. These embodiments are illustrative only and are not intended to limit the present invention. For easy understanding of the principle and embodiments of the present invention by those skilled in the art, the embodiments of the present invention shall be described taking a macro-pico heterogeneous network scenario in an LTE system as an example. However, it should be understood that the embodiments of the present invention are not limited to above heterogeneous network scenario, and are applicable to other heterogeneous network scenarios, such as a macro-femto scenario. Furthermore, in an interference coordination scheme based on carrier aggregation, a subframe synchronization and a symbol synchronization of a secondary carrier may employ a scheme similar to that of the present invention. Particularly, when there exists no CRS in a secondary carrier, there is an urgent need of a scheme similar to that of the present invention to solve the problem of subframe synchronization and symbol synchronization.

Fig. 2 is a schematic diagram of a location of a synchronization channel (PSS/SSS) and a broadcast channel (PBCH) of a current LTE system.

Currently, in an LTE system, following functions can be realized in detection of a synchronization channel (PSS/SSS): (1) synchronization of a time and a frequency of the system may be realized; wherein, the time synchronization includes symbol synchronization and frame synchronization; (2) a length of a cyclic prefix of the system may be obtained; and (3) physical cell-ID of the system may be obtained. Wherein, through PSS detection, a user end may obtain: (1) symbol synchronization of the system; (2) particular cell ID within a cell-ID group of a cell; and (3) estimated channel, for providing coherent detection for an SSS. Wherein, through SSS detection, a user end may obtain: (1) subframe-level synchronization of the system; (2) a type of a cyclic prefix of a cell; and (3) a cell-ID group number. And some system information can be obtained through detecting a broadcast channel (PBCH), including: (1) a downlink system bandwidth; (2) a system frame number; (3) a duration of a PHICH and a resource occupied by it; and (4) the number of antenna ports.

Wherein, physical positions of PSS/SSS/PDCH in FDD/TDD system are shown in Fig. 2. In frequency domain, PSS/SSS/PDCH occupy 6 resource blocks at the center of the system; and in time domain, a transmission interval of a PBCH is 10ms and it occupies the 7^{th}-10^{th} OFDM symbols in the 0^{th} subframe of each transmission frame, each PBCH data block repeatedly transmits for 4 times, thereby ensuring reliable transmission of system information. A transmission interval of the PSS/SSS is 5ms, which realize reliable transmission of a synchronization channel through a two-stage architecture, thereby ensuring the time for acquiring synchronization satisfies a system requirement. For a FDD system, a primary synchronization signal (PSS) occupies 6^{th} OFDM symbol in the 0^{th} and 5^{th} subframes of each transmission frame, and a secondary synchronization signal (SSS) occupies 5^{th} OFDM symbol in the 0^{th} and 5^{th} subframes of each transmission frame; and for a TDD system, a primary synchronization signal (PSS) occupies 2nd OFDM symbol in the 1^{st} subframe (a special subframe) of each transmission frame, and a secondary synchronization signal (SSS) occupies 13^{th} OFDM symbol in the 0^{th} subframe of each transmission frame.

In the TDD system of Fig. 2, a GP (guard part) and an UpPTS (uplink pilot time slot) are further included, and corresponding to the UpPTS, there further exists a DwPTS (downlink pilot time slot).

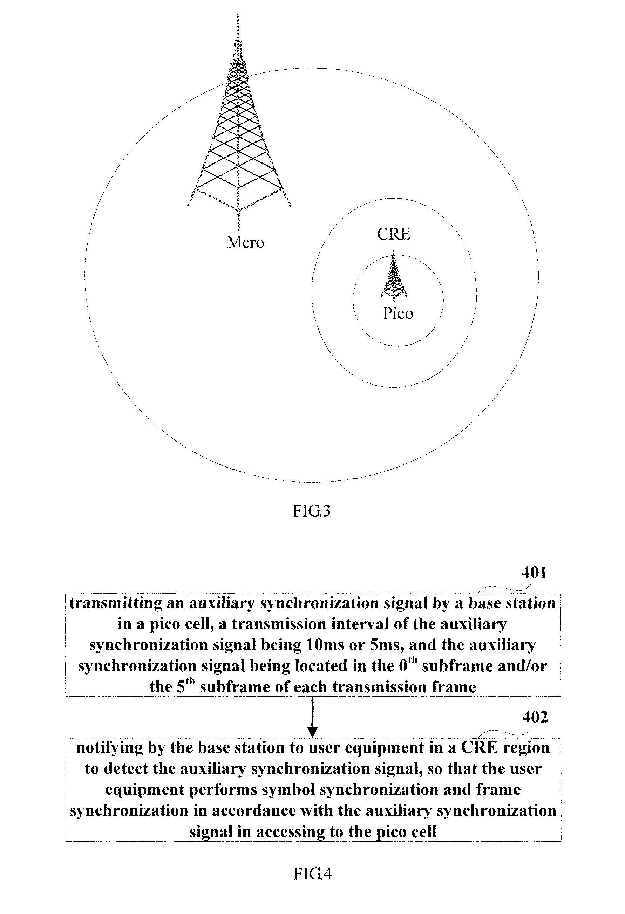

Fig. 3 is a schematic diagram of a macro-pico scenario. As shown in Fig. 3, as a user in a CRE region of a pico cell is subjected to relatively large interference of a macro cell, there is an urgent need of an enhancement interference coordination technology to ensure reliable transmission of the CRE user.

The method and apparatus for enhancing synchronization in a heterogeneous network of the embodiments of the present invention shall be described below with reference to the drawings.

### Embodiment 1

An embodiment of the present invention provides a method for enhancing synchronization in a heterogeneous network. Fig. 4 is a flowchart of the method. As shown in Fig. 4, the method includes:
step 401: transmitting an auxiliary synchronization signal by a base station in a pico cell, a transmission interval of the auxiliary synchronization signal being 10ms or 5ms, and the auxiliary synchronization signal being located in a 0^{th} subframe and/or a 5^{th} subframe of each transmission frame; and
step 402: notifying by the base station to user equipment in a cell range extension (CRE) region to detect the auxiliary synchronization signal, so that the user equipment performs symbol synchronization and frame synchronization in accordance with the auxiliary synchronization signal in accessing to the pico cell.

In this embodiment, when user equipment is started in a CRE region of a pico cell, it detects PSS/SSS of LTE to obtain synchronization with the macro cell, thereby establishing downlink connection with the macro cell; and the macro cell notifies related information of the pico cell (including a system message and synchronization-related information) to the user equipment via high-layer signaling, the related information here including: system bandwidth information transmitted in a PBCH, information on a system frame number, information on a duration of a PHICH and a resource occupied by it, information on the number of used antenna ports, information on a type of a cyclic prefix, and cell identity information, etc. Then, the macro cell notifies the user equipment to hand over to the pico cell, and forwards corresponding user information to an eNB of the pico cell. The eNB of the pico cell may transmit an ASS (auxiliary synchronization signal) in its transmission frame, and notify user equipment in its CRE region to detect the ASS. The user equipment in the CRE region of the pico cell hands over to the pico cell, and acquires symbol synchronization and frame synchronization by detecting the ASS transmitted by the eNB of the pico cell. If needed, the eNB of the pico cell may retransmit the previous related information to the user equipment in the CRE region via high-layer signaling.

In this embodiment, a method for notifying the user equipment in the CRE region to detect the ASS is not limited. For example, the base station may trigger, via specific high-layer signaling, the user equipment to detect the ASS, and may notify the user equipment in the CRE region to detect the ASS in an implied manner (the notification is impliedly contained in signaling transmitted to the user equipment in the CRE region).

In this embodiment, a synchronization function may be realized via a single-stage synchronization channel (an auxiliary synchronization signal), with no need of a hierarchy structure (a PSS and an SSS) to realize synchronization. Relative to a synchronization channel of an LTE system, the function of the ASS is simplified, which only realizes symbol synchronization and synchronization, and is no long responsible for cell-ID-related detection.

In this embodiment, a transmission interval of an ASS may be identical to that of a PBCH, that is, 10ms; and may also be identical to that of a PSS/SSS, that is, 5ms. And a particular location of an ASS may be in the 0^{th} and/or the 5^{th} subframe(s) of each transmission frame, thereby ensuring a time of acquisition of synchronization and coverage of the system, use of less time-frequency resource overhead, reduction of loss of system capacity, and compatibility of the system. In some embodiments, a synchronization scheme general to an FDD system and a TDD system may also be provided.

In an embodiment, in order to ensure that the transmission of an original signal of the base station is not affected and the interference of the transmission of the original signal of the base station is avoided, it is preferred that the auxiliary synchronization signal is located in an orthogonal frequency division multiplexing (OFDM) symbol in the 0^{th} subframe and/or the 5^{th} subframe of each transmission frame which has no collision with a physical downlink control channel (PDCCH), a cell-specific reference signal (CRS), a physical broadcast channel (PBCH), a primary synchronization signal (PSS) and a secondary synchronization signal (SSS).

In an embodiment, the transmission interval of the auxiliary synchronization signal is 10ms, a possible transmission location of the auxiliary synchronization signal is: in frequency domain, it is identical to the PSS/SSS/PBCH, and is still at 6 central resource blocks; and in time domain, it is the 12^{th} or the 13^{th} OFDM symbol in the 0^{th} subframe of each transmission frame, or the 9^{th}, the 10^{th}, the 12^{th} or the 13^{th} OFDM symbol in the 5^{th} subframe of each transmission frame, so that the user equipment performs symbol synchronization and frame synchronization in accordance with the transmission location of the auxiliary synchronization signal.

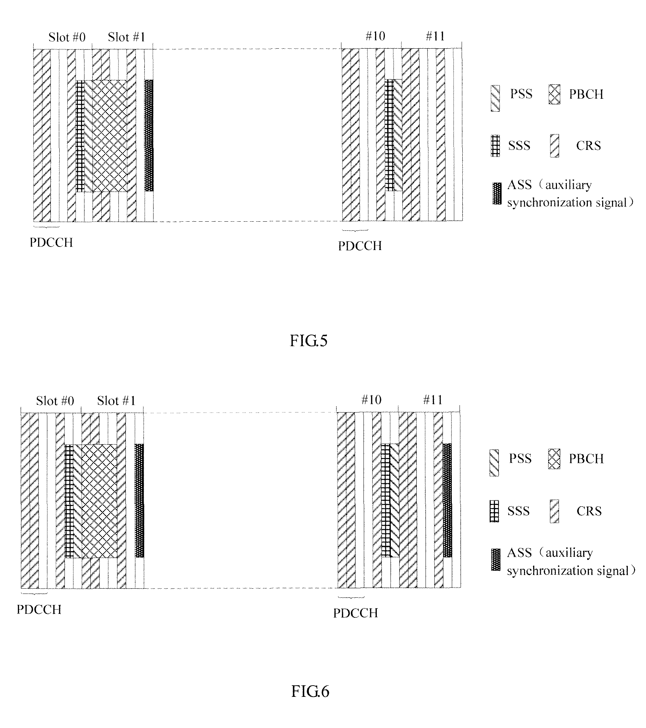

As shown in Fig. 5, by transmitting the auxiliary synchronization signal at the above location may avoid collision with the OFDM symbol occupied by the CRS, and reduce the effect of the CRS of the macro cell on the synchronization channel of the pico cell. By placing the auxiliary synchronization signal in the 0^{th} or the 5^{th} subframe of each transmission frame for transmission may reduce an effect of the macro cell on the central 6 resource blocks except the 0^{th} and the 5^{th} subframes, and lower an effect on scheduling. Furthermore, if a DM-RS (demodulation reference signal) is needed for demodulation, the auxiliary synchronization signal needs to be transmitted in a 9^{th} or 10^{th} OFDM symbol in the 5^{th} subframe of each transmission frame; otherwise, the auxiliary synchronization signal will be in collision with the DM-RS of the central 6 resource blocks, thereby affecting the performance of the DM-RS or the auxiliary synchronization signal; if a CRS is used for demodulation, the above limitation will not occur. For example, if the DM-RS is used for demodulation, and punching is performed to the auxiliary synchronization signal, the synchronization performance will be seriously affected; and if punching is performed to the DM-RS, notifying the user that the DM-RS of the central 6 resource blocks in frequency domain is not transmitted and cannot be used for channel estimation is needed.

Furthermore, as shown in Fig. 2, as an SSS is transmitted in the 13^{th} OFDM symbol in the 0^{th} and the 5^{th} subframes of each transmission frame in the TDD system, in consideration of a unified synchronization solution of the TDD system and the FDD system, the auxiliary synchronization signal cannot be transmitted in the 13^{th} OFDM symbol in the 0^{th} or the 5^{th} subframes of each transmission frame. In such a case, the auxiliary synchronization signal may be transmitted in the 12^{th} OFDM symbol in the 0^{th} subframe of each transmission frame, or in the 9^{th} or the 10^{th} or the 12^{th} OFDM symbol in the 5^{th} subframe of each transmission frame.

In another embodiment, the transmission interval of the auxiliary synchronization signal is 5ms, different from the realization of synchronization by a two-stage structure of a primary synchronization signal (PSS) and a secondary synchronization signal (SSS) in an LTE system, the auxiliary synchronization signal in the embodiment of the present invention uses only a single channel to realize symbol-level synchronization and frame-level synchronization. In this embodiment, two methods are proposed to realize symbol synchronization and frame synchronization, which shall be described below, respectively.

Fig. 6 is a schematic diagram of an example of an auxiliary synchronization signal with a transmission interval being 5ms. Referring to Fig. 6, in this example, a possible transmission location of the auxiliary synchronization signal is: in frequency domain, it is identical to the PSS/SSS/PBCH, and is still at 6 central resource blocks; and in time domain, it is the 12^{th} or the 13^{th} OFDM symbol in the 0^{th} subframe of each transmission frame, or the 9^{th}, the 10^{th}, the 12^{th} or the 13^{th} OFDM symbol in the 5^{th} subframe of each transmission frame; wherein, the sequence number of a OFDM symbol used by the auxiliary synchronization signal in the 0^{th} subframe is different from that used in the 5^{th} subframe.

In this embodiment, the transmission interval of the auxiliary synchronization signal is 5ms, and the auxiliary synchronization signal is transmitted in different OFDM symbols in the 0^{th} subframe and the 5^{th} subframe of each transmission frame. At this moment, the user equipment may directly perform symbol synchronization according to a transmission sequence of the auxiliary synchronization signal, and perform frame synchronization according to a location of the auxiliary synchronization signal relative to a location of a synchronization signal of an LTE system.

For example, referring to Fig. 6, if the auxiliary synchronization signal is transmitted in the 13^{th} OFDM symbol in the 0^{th} subframe and the 12^{th} OFDM symbol in the 5^{th} subframe of each transmission frame, in performing symbol synchronization, the symbol synchronization may be performed directly according to the transmission sequence of the auxiliary synchronization signal of the above subframe, the transmission sequence of the auxiliary synchronization signal being not limited in this embodiment. In performing frame synchronization, as the locations of the symbols of the auxiliary synchronization signal in the 0^{th} subframe and the 5^{th} subframe of each transmission frame are different, its locations relative to that of a synchronization signal (a PSS of an SSS) of the LTE system are also different. For example, the location of the auxiliary synchronization signal in the 0^{th} subframe is apart from the PSS by 6 OFDM symbols, the location of the auxiliary synchronization signal in the 5^{th} subframe is apart from the PSS by 5 OFDM symbols, and the frame synchronization may be performed according to the different relative locations.

Preferably, in the TDD system, the last OFDM symbol in the 0^{th} subframe and the 5^{th} subframe (the 13^{th} OFDM symbol, refer to Fig. 2) is used for transmitting SSS. Hence, a solution general to an FDD system and a TDD system is: transmitting the auxiliary synchronization signal in the 12^{th} OFDM symbol in the 0^{th} subframe of each transmission frame, and the 9^{th}, the 10^{th} or the 12^{th} OFDM symbol in the 5^{th} subframe of each transmission frame whose sequence number different from that of the OFDM symbol used in the 0^{th} subframe.

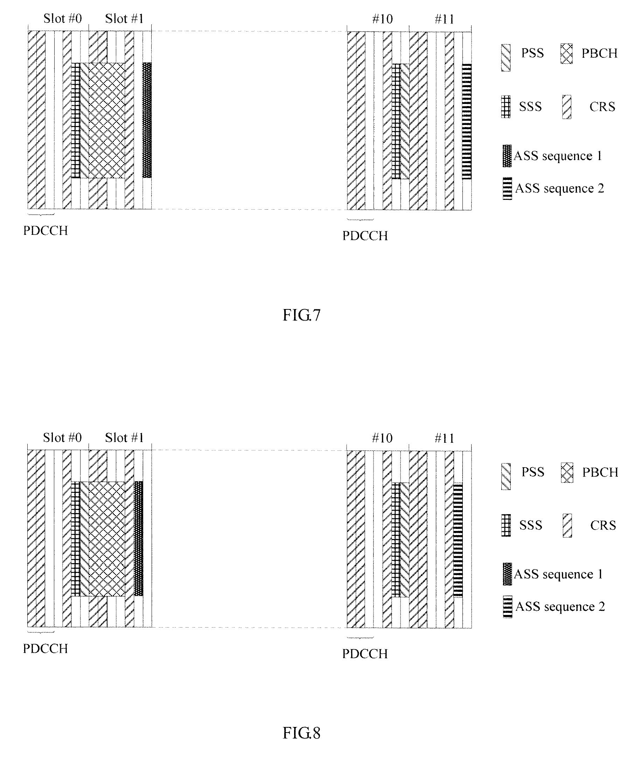

Figs. 7 and 8 are schematic diagrams of another example of an auxiliary synchronization signal with a transmission interval being 5ms. Referring to Figs. 7 and 8, in this example, a possible transmission location of the auxiliary synchronization signal is: in frequency domain, it is identical to the PSS/SSS/PBCH, and is still at 6 central resource blocks; and in time domain, it is the 12^{th} or the 13^{th} OFDM symbol in the 0^{th} subframe and the 5^{th} subframe of each transmission frame.

In this embodiment, the auxiliary synchronization signal is transmitted in an OFDM symbol with the same sequence number in the 0^{th} subframe and the 5^{th} subframe of each transmission frame. At this moment, the user equipment performs symbol synchronization according to the transmission sequence of the auxiliary synchronization signal, and performs frame synchronization according to different transmission sequences of the auxiliary synchronization signal in the 0^{th} subframe and the 5^{th} subframe.

For example, referring to Fig. 7, the auxiliary synchronization signal is transmitted in the 13^{th} OFDM symbol in the 0^{th} subframe and the 13^{th} OFDM symbol in the 5^{th} subframe of each transmission frame; or, referring to Fig. 8, the auxiliary synchronization signal is transmitted in the 12^{th} OFDM symbol in the 0^{th} subframe and the 12^{th} OFDM symbol in the 5^{th} subframe of each transmission frame. At this moment, the user equipment needs only to use different transmission sequences of the auxiliary synchronization signal in the 0^{th} subframe and the 5^{th} subframe to realize frame synchronization through blind related detection of the different transmission sequences of the auxiliary synchronization signal.

In this embodiment, there are two methods for the used different transmission sequences of the auxiliary synchronization signal. The first one is that a PSS sequence of an LTE system is used in the 0^{th} subframe of each transmission frame. For example, a sequence of u=25 or 29 or 34 is used as the transmission sequence of the auxiliary synchronization signal of the 0^{th} subframe; and a *u* value better correlated to three sequences generated by u=25, 29, 34, such as u=19, is used in the 5^{th} subframe, and a sequence generated by this *u* value is used as the transmission sequence of the auxiliary synchronization signal of the 5^{th} subframe, that is, in the 5^{th} subframe, a sequence less correlated to the PSS sequence of the LTE system is used as the transmission sequence of the 5^{th} subframe. And the second one is that a fixed transmissions sequence is used in the 0^{th} subframe and the 5^{th} subframe of each transmission frame. Preferably, the transmission sequence of the auxiliary synchronization signal used in the 0^{th} subframe and the transmission sequence of the auxiliary synchronization signal used in the 5th subframe are selected from the PSS sequence of the LTE system. For example, in the 0^{th} subframe, a transmission sequence of the auxiliary synchronization signal generated by u=29 is fixedly used, and in the 5^{th} subframe, a transmission sequence of the auxiliary synchronization signal generated by u=34 is fixedly used.

Preferably, in the TDD system, the last OFDM symbol in the 0^{th} subframe and the 5^{th} subframe (the 13^{th} OFDM symbol, refer to Fig. 2) is used for transmitting SSS. Hence, a solution general to an FDD system and a TDD system is: the auxiliary synchronization signal is only transmitted in the 12^{th} OFDM symbol in the 0^{th} subframe and the 5^{th} subframe of each transmission frame, as shown in Fig. 8.

With the method of this embodiment, following effects may be produced: (1) ensuring that a performance requirement is satisfied, including ensuring a time of acquisition of synchronization and coverage of the system; (2) less time-frequency resource overhead; wherein the pico cell transmits the auxiliary synchronization signal in a resource to which the auxiliary synchronization signal corresponds, and the macro cell does not transmit information in a resource corresponding to the auxiliary synchronization channel of the pico cell, thereby the embodiment reduces loss of system capacity with a less time-frequency resource overhead; (3) ensuring compatibility; wherein the added auxiliary synchronization channel of the pico cell neither has effect on synchronization of a user of Rel.8/9/10 in the pico cell, nor has effect on synchronization of a user in the macro cell; and (4) some synchronization solutions are general to an FDD system and a TDD system.

This embodiment is described taking interference coordination in a macro-pico heterogeneous network scenario as an example. In an enhanced inter-cell interference coordination solution based on carrier aggregation, a secondary carrier is needed to assist a primary carrier in transmitting data. At this moment, subframe and symbol synchronization of the secondary carrier may be performed by using a method similar to the method provided by the embodiment of the present invention. The principle for solving the technical problem is similar to the embodiment of the present invention, and shall not be described herein any further.

In Embodiment 1, the method for enhancing synchronization in a heterogeneous network is described from a base station side of the pico cell, and the method for enhancing synchronization in a heterogeneous network shall be described below from a user equipment side in Embodiment 2, with the contents identical to those in Embodiment 1 being incorporated herein.

### Embodiment 2

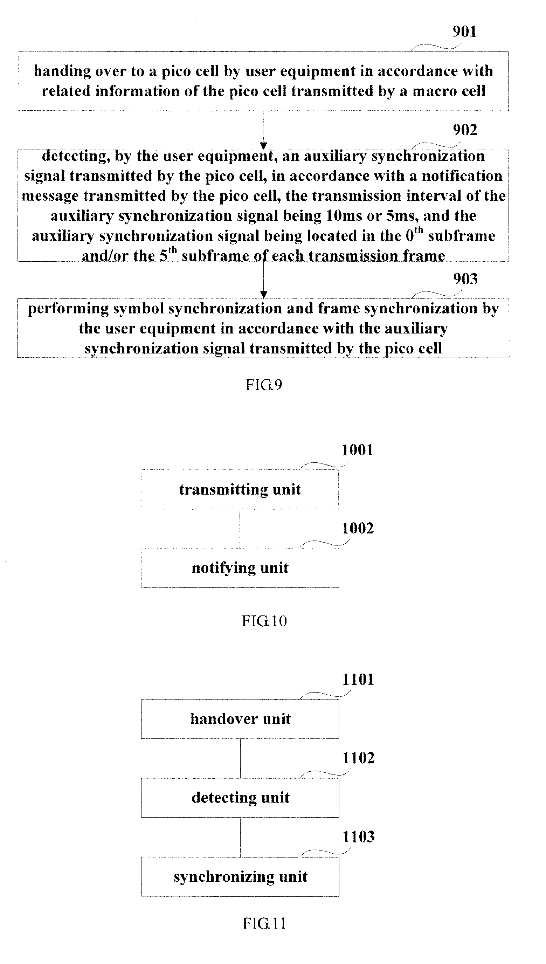

An embodiment of the present invention provides a method for enhancing synchronization in a heterogeneous network. Fig. 9 is a flowchart of the method. As shown in Fig. 9, the method includes:
step 901: handing over to a pico cell by user equipment in accordance with related information of the pico cell transmitted by a macro cell;
step 902: detecting, by the user equipment, an auxiliary synchronization signal transmitted by the pico cell, in accordance with a notification message transmitted by the pico cell, a transmission interval of the auxiliary synchronization signal being 10ms or 5ms, and the auxiliary synchronization signal being located in the 0^{th} subframe and/or the 5^{th} subframe of each transmission frame; and
step 903: performing symbol synchronization and frame synchronization by the user equipment in accordance with the auxiliary synchronization signal transmitted by the pico cell.

In this embodiment, the auxiliary synchronization signal is located in an orthogonal frequency division multiplexing (OFDM) symbol in the 0^{th} subframe and/or the 5^{th} subframe of each transmission frame which has no collision with a physical downlink control channel (PDCCH), a cell-specific reference signal (CRS), a physical broadcast channel (PBCH), a primary synchronization signal (PSS) and a secondary synchronization signal (SSS).

In an embodiment, when the transmission interval of the auxiliary synchronization signal is 10ms, the auxiliary synchronization signal is located in the 12^{th} or the 13^{th} OFDM symbol in the 0^{th} subframe of each transmission frame, or in the 9^{th}, the 10^{th}, the 12^{th} or the 13^{th} OFDM symbol in the 5^{th} subframe of each transmission frame, so that the user equipment may perform symbol synchronization and frame synchronization according to a transmission location of the auxiliary synchronization signal.

Preferably, when the transmission interval of the auxiliary synchronization signal is 10ms, the auxiliary synchronization signal is located in the 12^{th} or the 13^{th} OFDM symbol in the 0^{th} subframe of each transmission frame, or in the 9^{th} or the 10^{th} or the 12^{th} OFDM symbol of the 5^{th} subframe of each transmission frame. Therefore, it is applicable to an FDD system, and also to a TDD system.

In another embodiment, when the transmission interval of the auxiliary synchronization signal is 5ms, the auxiliary synchronization signal is located in the 12^{th} or the 13^{th} OFDM symbol in the 0^{th} subframe of each transmission frame, and in the 9^{th}, the 10^{th}, the 12^{th} or the 13^{th} OFDM symbol in the 5^{th} subframe of each transmission frame; wherein a sequence number of the OFDM symbol used by the auxiliary synchronization signal in the 0^{th} subframe is different from that used in the 5^{th} subframe. Therefore, the user equipment may perform symbol synchronization in accordance with a transmission sequence of the auxiliary synchronization signal, and perform frame synchronization in accordance with a location of the auxiliary synchronization signal relative to a location of a synchronization signal of an LTE system.

Preferably, when the transmission interval of the auxiliary synchronization signal is 5ms, the auxiliary synchronization signal is located in the 12^{th} OFDM symbol in the 0^{th} subframe of each transmission frame and in the 9^{th} or the 10^{th} or the 12^{th} OFDM symbol in the 5^{th} subframe of each transmission frame; wherein a sequence number of the OFDM symbol used by the auxiliary synchronization signal in the 0^{th} subframe is different from that used in the 5^{th} subframe. Therefore, it is applicable to an FDD system, and also to a TDD system.

In still another embodiment, when the transmission interval of the auxiliary synchronization signal is 5ms, the auxiliary synchronization signal is located in the 12^{th} or the 13^{th} OFDM symbol in the 0^{th} and 5^{th} subframes of each transmission frame. Therefore, the user equipment may perform symbol synchronization in accordance with a transmission sequence of the auxiliary synchronization signal, and performs frame synchronization in accordance with different transmission sequences of the auxiliary synchronization signal in the 0^{th} and 5^{th} subframes of each transmission frame.

Preferably, when the transmission interval of the auxiliary synchronization signal is 5ms, the auxiliary synchronization signal is located in the 12^{th} OFDM symbol of the 0^{th} subframe and the 5^{th} subframe of each transmission frame. Therefore, it is applicable to an FDD system, and also to a TDD system.

In an implementation mode of this embodiment, the user equipment may use a PSS sequence in the LTE system as the transmission sequence of the auxiliary synchronization signal in the 0^{th} subframe of each transmission frame. For example, a sequence of u=25 or 29 or 34 is used as a transmission sequence of the auxiliary synchronization signal of the 0^{th} subframe; and a *u* value better correlated to three sequences generated by u=25, 29, 34, such as u=19, is used in the 5^{th} subframe, and a sequence generated by this *u* value is used as a transmission sequence of the auxiliary synchronization signal of the 5^{th} subframe, that is, the user equipment uses a synchronization signal sequence less correlated to a PSS sequence of the LTE system as a transmission sequence of the auxiliary synchronization signal of the 5^{th} subframe of each transmission frame of the auxiliary synchronization signal.

In another implementation mode of this embodiment, the user equipment may also respectively use fixed transmissions sequences as transmission sequences of the auxiliary synchronization signal of the 0^{th} subframe and the 5^{th} subframe of each transmission frame of the auxiliary synchronization signal, and the transmission sequences of the auxiliary synchronization signal used in the 0^{th} subframe is different from that used in the 5^{th} subframe. Preferably, the transmission sequence of the auxiliary synchronization signal used in the 0^{th} subframe and the transmission sequence of the auxiliary synchronization signal used in the 5^{th} subframe are selected from a PSS sequence of the LTE system. For example, a transmission sequence generated by u=29 is used as the transmission sequence of the auxiliary synchronization signal of the 0^{th} subframe of each transmission frame of the auxiliary synchronization signal, and a transmission sequence generated by u=34 is used as the transmission sequence of the auxiliary synchronization signal of the 5^{th} subframe of each transmission frame of the auxiliary synchronization signal.

With the method of this embodiment, the base station transmits the auxiliary synchronization signal in a specific OFDM symbol in a specific subframe, and assists the user equipment in performing symbol synchronization and frame synchronization. Therefore, the following effects may be produced: (1) ensuring that a performance requirement is satisfied, including ensuring a time of acquisition of synchronization and coverage of the system; (2) less time-frequency resource overhead; wherein the pico cell transmits the auxiliary synchronization signal in a resource to which the auxiliary synchronization signal corresponds, and the macro cell does not transmit information in a resource corresponding to the auxiliary synchronization signal of the pico cell, thereby the loss of the system capacity being reduced with a less time-frequency resource overhead; (3) ensuring compatibility; wherein the added auxiliary synchronization channel of the pico cell neither has effect on synchronization of a user of Rel.8/9/10 in the pico cell, nor has effect on synchronization of a user in the macro cell; and (4) some synchronization solutions are general to an FDD system and a TDD system.

An embodiment of the present invention further provides a base station, as described in Embodiment 3 below. As the principle of the base station for solving problem is similar to that of the method for enhancing synchronization in a heterogeneous network in Embodiment 1, the implementation of the method may be referred to for the implementation of the base station, and the repeated parts shall not be described any further.

### Embodiment 3

An embodiment of the present invention further provides a base station of a pico cell in a heterogeneous network. Fig. 10 is a schematic diagram of the structure of the base station. Referring to Fig. 10, the base station includes:
a transmitting unit 1001 configured to transmit an auxiliary synchronization signal, a transmission interval of the auxiliary synchronization signal being 10ms or 5ms, and the auxiliary synchronization signal being located in the 0^{th} subframe and/or the 5^{th} subframe of each transmission frame; and
a notifying unit 1001 configured to notify user equipment in a cell range extension (CRE) region to detect the auxiliary synchronization signal, so that the user equipment performs symbol synchronization and frame synchronization in accordance with the auxiliary synchronization signal in accessing to the pico cell.

In this embodiment, the auxiliary synchronization signal is located in an orthogonal frequency division multiplexing (OFDM) symbol in the 0^{th} subframe and/or the 5^{th} subframe of each transmission frame which has no collision with a physical downlink control channel (PDCCH), a cell-specific reference signal (CRS), a physical broadcast channel (PBCH), a primary synchronization signal (PSS) and a secondary synchronization signal (SSS).

In an embodiment, when a transmission interval of the auxiliary synchronization signal is 10ms, the auxiliary synchronization signal is located in the 12^{th} or the 13^{th} OFDM symbol in the 0^{th} subframe of each transmission frame, or in the 9^{th}, the 10^{th}, the 12^{th} or the 13^{th} OFDM symbol in the 5^{th} subframe of each transmission frame, so that the user equipment performs symbol synchronization and frame synchronization in accordance with a transmission location of the auxiliary synchronization signal. Preferably, the auxiliary synchronization signal is located in the 12^{th} OFDM symbol in the 0^{th} subframe of each transmission frame, or in the 9^{th}, the 10^{th} or the 12^{th} OFDM symbol in the 5^{th} subframe of each transmission frame, so that it is applicable to both an FDD system and a TDD system.

In another embodiment, when a transmission interval of the auxiliary synchronization signal is 5ms, the auxiliary synchronization signal is located in the 12^{th} or the 13^{th} OFDM symbol in the 0^{th} subframe of each transmission frame, and in the 9^{th}, the 10^{th}, the 12^{th} or the 13^{th} OFDM symbol in the 5^{th} subframe of each transmission frame; and wherein a sequence number of the OFDM symbol used by the auxiliary synchronization signal in the 0^{th} subframe is different from that used in the 5^{th} subframe, so that the user equipment performs symbol synchronization in accordance with the transmission sequence of the auxiliary synchronization signal, and performs frame synchronization in accordance with a location of the auxiliary synchronization signal relative to a location of a synchronization signal of a long-term evolution (LTE) system. Preferably, the auxiliary synchronization signal is located in the 12^{th} OFDM symbol in the 0^{th} subframe of each transmission frame and in the 9^{th}, the 10^{th} or the 12^{th} OFDM symbol in the 5^{th} subframe of each transmission frame, so that it is applicable to both an FDD system and a TDD system.

In still another embodiment, when a transmission interval of the auxiliary synchronization signal is 5ms, the auxiliary synchronization signal is located in the 12^{th} or the 13^{th} OFDM symbol in the 0^{th} and 5^{th} sub frames of each transmission frame, so that the user equipment performs symbol synchronization in accordance with a transmission sequence of the auxiliary synchronization signal, and performs frame synchronization in accordance with different transmission sequences of the auxiliary synchronization signal in the 0^{th} and 5^{th} subframes of each transmission frame. Preferably, the auxiliary synchronization signal is located in the 12^{th} OFDM symbol in the 0^{th} subframe and the 5^{th} subframe of each transmission frame, so that it is applicable to both an FDD system and a TDD system.

By transmitting the auxiliary synchronization signal by the base station of this embodiment, the user equipment may detect the auxiliary synchronization signal, so as to obtain symbol synchronization and frame synchronization, thereby avoiding interference of the macro cell to the user equipment.

An embodiment of the present invention further provides user equipment, as described in Embodiment 4 below. As the principle of the user equipment for solving problem is similar to that of the method for enhancing synchronization in a heterogeneous network in Embodiment 2, the implementation of the method may be referred to for the implementation of the user equipment, and the repeated parts shall not be described any further.

### Embodiment 4

An embodiment of the present invention further provides user equipment. Fig. 11 is a schematic diagram of the structure of the user equipment. Referring to Fig. 11, the user equipment includes:
a handover unit 1101 configured to hand over the user equipment to a pico cell in accordance with related information of the pico cell transmitted by a macro cell;
a detecting unit 1102 configured to detect a auxiliary synchronization signal transmitted by the pico cell, in accordance with a notification message transmitted by the pico cell, a transmission interval of the auxiliary synchronization signal being 10ms or 5ms, and the auxiliary synchronization signal being located in the 0^{th} subframe and/or the 5^{th} subframe of each transmission frame; and
a synchronizing unit 1103 configured to perform symbol synchronization and frame synchronization in accordance with the auxiliary synchronization signal transmitted by the pico cell.

In this embodiment, the auxiliary synchronization signal is located in an orthogonal frequency division multiplexing (OFDM) symbol in a 0^{th} subframe and/or a 5^{th} subframe of each transmission frame which has no collision with a physical downlink control channel (PDCCH), a cell-specific reference signal (CRS), a physical broadcast channel (PBCH), a primary synchronization signal (PSS) and a auxiliary synchronization signal (SSS).

In an embodiment, when a transmission interval of the auxiliary synchronization signal is 10ms, the auxiliary synchronization signal is located in the 12^{th} or the 13^{th} OFDM symbol in the 0^{th} subframe of each transmission frame, or in the 9^{th}, the 10^{th}, the 12^{th} or the 13^{th} OFDM symbol in the 5^{th} subframe of each transmission frame. At this moment, the synchronizing unit 1103 performs symbol synchronization and frame synchronization in accordance with a transmission location of the auxiliary synchronization signal. Preferably, in this embodiment, the auxiliary synchronization signal is located in the 12^{th} OFDM symbol in the 0^{th} subframe of each transmission frame, or in the 9^{th} or the 10^{th} or the 12^{th} OFDM symbol in the 5^{th} subframe of each transmission frame, so that it is applicable to an FDD system, and also to a TDD system.

In another embodiment, when a transmission interval of the auxiliary synchronization signal is 5ms, the auxiliary synchronization signal is located in the 12^{th} or the 13^{th} OFDM symbol in the 0^{th} subframe of each transmission frame, and in the 9^{th}, the 10^{th}, the 12^{th} or the 13^{th} OFDM symbol in the 5^{th} subframe of each transmission frame; wherein a sequence number of the OFDM symbol used by the auxiliary synchronization signal in the 0^{th} subframe is different from that used in the 5^{th} subframe. At this moment, the synchronizing unit 1103 performs symbol synchronization in accordance with a transmission sequence of the auxiliary synchronization signal, and performs frame synchronization in accordance with a location of the auxiliary synchronization signal relative to a location of a synchronization signal of an LTE system. Preferably, in this embodiment, the auxiliary synchronization signal is located in the 12^{th} OFDM symbol in the 0^{th} subframe of each transmission frame, or in the 9^{th} or the 10^{th} or the 12^{th} OFDM symbol in the 5^{th} subframe of each transmission frame, so that it is applicable to an FDD system, and also to a TDD system.

In still another embodiment, when a transmission interval of the auxiliary synchronization signal is 5ms, the auxiliary synchronization signal is located in the 12^{th} or the 13^{th} OFDM symbol in the 0^{th} and 5^{th} subframes of each transmission frame. At this moment, the synchronizing unit 1103 performs symbol synchronization in accordance with a transmission sequence of the auxiliary synchronization signal, and performs frame synchronization in accordance with different transmission sequences of the auxiliary synchronization signal in the 0^{th} and 5^{th} subframes of each transmission frame. Preferably, in this embodiment, the auxiliary synchronization signal is located in the 12^{th} OFDM symbol in the 0^{th} subframe and the 5^{th} subframe of each transmission frame, so that it is applicable to an FDD system, and also to a TDD system.

In a implementation mode of this embodiment, the synchronizing unit 1103 uses a PSS sequence in an LTE system as the transmission sequence of the auxiliary synchronization signal in the 0^{th} subframe of each transmission frame, and uses a synchronization signal sequence less correlated to the PSS sequence of the LTE system as the transmission sequence of the auxiliary synchronization signal in the 5^{th} subframe of each transmission frame.

In another mode of implementation of this embodiment, the synchronizing unit 1103 uses fixed synchronization signal sequence as the transmission sequences of the auxiliary synchronization signals in the 0^{th} and 5^{th} subframes of each transmission frame, respectively, and the transmission sequence of the auxiliary synchronization signal used in the 0^{th} subframe is different from that of the auxiliary synchronization signal used in the 5^{th} subframe. Preferably, the transmission sequence of the auxiliary synchronization signal used in the 0^{th} subframe and the transmission sequence of the auxiliary synchronization signal used in the 5^{th} subframe are selected from PSS sequences in the LTE system.

With the user equipment of the embodiment of the present invention, by detecting the auxiliary synchronization signal transmitted by the base station of the pico cell, symbol synchronization and frame synchronization may be obtained, thereby avoiding interference of the macro cell to the synchronization channel of the user equipment.

An embodiment of the present invention further provides a computer-readable program, wherein when the program is executed in a base station, the program enables a computer to carry out the method for enhancing synchronization in a heterogeneous network as described in Embodiment 1 in the base station.

An embodiment of the present invention further provides a storage medium in which a computer-readable program is stored, wherein the computer-readable program enables a computer to carry out the method for enhancing synchronization in a heterogeneous network as described in Embodiment 1 in a base station.

An embodiment of the present invention further provides a computer-readable program, wherein when the program is executed in user equipment, the program enables a computer to carry out the method for enhancing synchronization in a heterogeneous network as described in Embodiment 2 in the user equipment.

An embodiment of the present invention further provides a storage medium in which a computer-readable program is stored, wherein the computer-readable program enables a computer to carry out the method for enhancing synchronization in a heterogeneous network as claimed in described in Embodiment 2 in user equipment.

The above apparatuses and methods of the present invention may be implemented by hardware, or by hardware in combination with software. The present invention relates to such a computer-readable program that when the program is executed by a logic device, the logic device is enabled to carry out the apparatus or components as described above, or to carry out the methods or steps as described above. The present invention also relates to a storage medium for storing the above program, such as a hard disk, a floppy disk, a CD, a DVD, and a flash memory, etc.

The present invention is described above with reference to particular embodiments. However, it should be understood by those skilled in the art that such a description is illustrative only, and not intended to limit the protection scope of the present invention. Various variants and modifications may be made by those skilled in the art according to the spirits and principle of the present invention, and such variants and modifications fall within the scope of the present invention.

## Claims

1. A method for enhancing synchronization in a heterogeneous network, comprising:
transmitting an auxiliary synchronization signal by a base station in a pico cell, a transmission interval of the auxiliary synchronization signal being 10ms or 5ms, and the auxiliary synchronization signal being located in a 0^{th} subframe and/or a 5^{th} subframe of each transmission frame; and
notifying by the base station to user equipment in a cell range extension (CRE) region to detect the auxiliary synchronization signal, so that the user equipment performs symbol synchronization and frame synchronization in accordance with the auxiliary synchronization signal in accessing to the pico cell.

2. The method according to claim 1, wherein,
the auxiliary synchronization signal is located in an orthogonal frequency division multiplexing (OFDM) symbol in the 0^{th} subframe and/or the 5^{th} subframe of each transmission frame which has no collision with a physical downlink control channel (PDCCH), a cell-specific reference signal (CRS), a physical broadcast channel (PBCH), a primary synchronization signal (PSS) and a secondary synchronization signal (SSS).

3. The method according to claim 2, wherein,
when the transmission interval of the auxiliary synchronization signal is 10ms, the auxiliary synchronization signal is located in the 12^{th} or the 13^{th} OFDM symbol in the 0^{th} subframe of each transmission frame, or in the 9^{th}, the 10^{th}, the 12^{th} or the 13^{th} OFDM symbol in the 5^{th} subframe of each transmission frame, so that the user equipment performs symbol synchronization and frame synchronization in accordance with a transmission location of the auxiliary synchronization signal.

4. The method according to claim 2, wherein,
when the transmission interval of the auxiliary synchronization signal is 5ms, the auxiliary synchronization signal is located in the 12^{th} or the 13^{th} OFDM symbol in the 0^{th} subframe of each transmission frame, and in the 9^{th}, the 10^{th}, the 12^{th} or the 5^{th} OFDM symbol in the 5^{th} subframe of each transmission frame; wherein a sequence number of the OFDM symbol used by the auxiliary synchronization signal in the 0^{th} subframe is different from that used in the 5^{th} subframe, so that the user equipment performs symbol synchronization in accordance with a transmission sequence of the auxiliary synchronization signal, and performs frame synchronization in accordance with a location of the auxiliary synchronization signal relative to a location of a synchronization signal of a long-term evolution (LTE) system.

5. The method according to claim 2, wherein,
when the transmission interval of the auxiliary synchronization signal is 5ms, the auxiliary synchronization signal is located in the 12^{th} or the 13^{th} OFDM symbol in the 0^{th} and 5^{th} subframes of each transmission frame, so that the user equipment performs symbol synchronization in accordance with a transmission sequence of the auxiliary synchronization signal, and performs frame synchronization in accordance with different transmission sequences of the auxiliary synchronization signal in the 0^{th} and 5^{th} subframes of each transmission frame.

6. The method according to claim 5, wherein,
when the auxiliary synchronization signal is located in the 12^{th} OFDM symbol in the 0^{th} and 5^{th} subframes of each transmission frame, the method is applicable to a frequency division duplexing (FDD) system and a time division duplexing (TDD) system.

7. A method for enhancing synchronization in a heterogeneous network, comprising:
handing over to a pico cell by user equipment in accordance with related information of the pico cell transmitted by a macro cell;
detecting, by the user equipment, an auxiliary synchronization signal transmitted by the pico cell, in accordance with a notification message transmitted by the pico cell, a transmission interval of the auxiliary synchronization signal being 10ms or 5ms, and the auxiliary synchronization signal being located in the 0^{th} subframe and/or the 5^{th} subframe of each transmission frame; and
performing symbol synchronization and frame synchronization by the user equipment in accordance with the auxiliary synchronization signal transmitted by the pico cell.

8. The method according to claim 7, wherein,
the auxiliary synchronization signal is located in an orthogonal frequency division multiplexing (OFDM) symbol in the 0^{th} subframe and/or the 5^{th} subframe of each transmission frame which has no collision with a physical downlink control channel (PDCCH), a cell-specific reference signal (CRS), a physical broadcast channel (PBCH), a primary synchronization signal (PSS) and a secondary synchronization signal (SSS).

9. The method according to claim 8, wherein,
when the transmission interval of the auxiliary synchronization signal is 10ms, the auxiliary synchronization signal is located in the 12^{th} or the 13^{th} OFDM symbol in the 0^{th} subframe of each transmission frame, or in the 9^{th}, the 10^{th}, the 12^{th} or the 13^{th} OFDM symbol in the 5^{th} subframe of each transmission frame;
and wherein the user equipment performs symbol synchronization and frame synchronization in accordance with a transmission location of the auxiliary synchronization signal.

10. The method according to claim 8, wherein,
when the transmission interval of the auxiliary synchronization signal is 5ms, the auxiliary synchronization signal is located in the 12^{th} or the 13^{th} OFDM symbol in the 0^{th} subframe of each transmission frame, and in the 9^{th}, the 10^{th}, the 12^{th} or the 13^{th} OFDM symbol in the 5^{th} subframe of each transmission frame; wherein a sequence number of the OFDM symbol used by the auxiliary synchronization signal in the 0^{th} subframe is different from that used in the 5^{th} subframe;
and wherein the user equipment performs symbol synchronization in accordance with a transmission sequence of the auxiliary synchronization signal, and performs frame synchronization in accordance with a location of the auxiliary synchronization signal relative to a location of a synchronization signal of a long-term evolution (LTE) system.

11. The method according to claim 8, wherein,
when the transmission interval of the auxiliary synchronization signal is 5ms, the auxiliary synchronization signal is located in the 12^{th} or the 13^{th} OFDM symbol in the 0^{th} and 5^{th} subframes of each transmission frame;
and wherein the user equipment performs symbol synchronization in accordance with a transmission sequence of the auxiliary synchronization signal, and performs frame synchronization in accordance with different transmission sequences of the auxiliary synchronization signal in the 0^{th} and 5^{th} subframes of each transmission frame.

12. The method according to claim 11, wherein the user equipment uses a PSS sequence in an LTE system as the transmission sequence of the auxiliary synchronization signal in the 0^{th} subframe of each transmission frame, and uses a synchronization signal sequence less correlated to the PSS sequence in the LTE system as the transmission sequence of the auxiliary synchronization signal in the 5^{th} subframe of each transmission frame.

13. The method according to claim 11, wherein the user equipment uses fixed synchronization signal sequences as the transmission sequences of the auxiliary synchronization signals in the 0^{th} and 5^{th} subframes of each transmission frame, respectively, and the transmission sequence of the auxiliary synchronization signal used in the 0^{th} subframe is different from that of the auxiliary synchronization signal used in the 5^{th} subframe.

14. The method according to claim 13, wherein the transmission sequence of the auxiliary synchronization signal used in the 0^{th} subframe and the transmission sequence of the auxiliary synchronization signal used in the 5^{th} subframe are selected from PSS sequences in the LTE system.

15. A base station of a pico cell in a heterogeneous network, comprising:
a transmitting unit configured to transmit an auxiliary synchronization signal, a transmission interval of the auxiliary synchronization signal being 10ms or 5ms, and the auxiliary synchronization signal being located in the 0^{th} subframe and/or the 5^{th} subframe of each transmission frame; and
a notifying unit configured to notify user equipment in a cell range extension (CRE) region to detect the auxiliary synchronization signal, so that the user equipment performs symbol synchronization and frame synchronization in accordance with the auxiliary synchronization signal in accessing to the pico cell.

16. The base station according to claim 15, wherein,
the auxiliary synchronization signal is located in an orthogonal frequency division multiplexing (OFDM) symbol in the 0^{th} subframe and/or the 5^{th} subframe of each transmission frame which has no collision with a physical downlink control channel (PDCCH), a cell-specific reference signal (CRS), a physical broadcast channel (PBCH), a primary synchronization signal (PSS) and a secondary synchronization signal (SSS).

17. The base station according to claim 16, wherein,
when the transmission interval of the auxiliary synchronization signal is 10ms, the auxiliary synchronization signal is located in the 12^{th} or the 13^{th} OFDM symbol in the 0^{th} subframe of each transmission frame, or in the 9^{th}, the 10^{th}, the 12^{th} or the 13^{th} OFDM symbol in the 5^{th} subframe of each transmission frame, so that the user equipment performs symbol synchronization and frame synchronization in accordance with a transmission location of the auxiliary synchronization signal.

18. The base station according to claim 16, wherein,
when the transmission interval of the auxiliary synchronization signal is 5ms, the auxiliary synchronization signal is located in the 12^{th} or the 13^{th} OFDM symbol in the 0^{th} subframe of each transmission frame, and in the 9^{th}, the 10^{th}, the 12^{th} or the 13^{th} OFDM symbol in the 5^{th} subframe of each transmission frame; and wherein a sequence number of the OFDM symbol used by the auxiliary synchronization signal in the 0^{th} subframe is different from that used in the 5^{th} subframe, so that the user equipment performs symbol synchronization in accordance with a transmission sequence of the auxiliary synchronization signal, and performs frame synchronization in accordance with a location of the auxiliary synchronization signal relative to a location of a synchronization signal of a long-term evolution (LTE) system.

19. The base station according to claim 16, wherein,
when the transmission interval of the auxiliary synchronization signal is 5ms, the auxiliary synchronization signal is located in the 12^{th} or the 13^{th} OFDM symbol in the 0^{th} and 5^{th} subframes of each transmission frame, so that the user equipment performs symbol synchronization in accordance with a transmission sequence of the auxiliary synchronization signal, and performs frame synchronization in accordance with different transmission sequences of the auxiliary synchronization signal in the 0^{th} and 5^{th} subframes of each transmission frame.

20. The base station according to claim 19, wherein,
when the auxiliary synchronization signal is located in the 12^{th} OFDM symbol in the 0^{th} and 5^{th} subframes of each transmission frame, the method is applicable to a frequency division duplexing (FDD) system and a time division duplexing (TDD) system.

21. User equipment, comprising:
a handover unit configured to hand over the user equipment to a pico cell in accordance with related information of the pico cell transmitted by a macro cell;
a detecting unit configured to detect an auxiliary synchronization signal transmitted by the pico cell, in accordance with a notification message transmitted by the pico cell, a transmission interval of the auxiliary synchronization signal being 10ms or 5ms, and the auxiliary synchronization signal being located in the 0^{th} subframe and/or the 5^{th} subframe of each transmission frame; and
a synchronizing unit configured to perform symbol synchronization and frame synchronization in accordance with the auxiliary synchronization signal transmitted by the pico cell.

22. The user equipment according to claim 21, wherein,
the auxiliary synchronization signal is located in an orthogonal frequency division multiplexing (OFDM) symbol in the 0^{th} subframe and/or the 5^{th} subframe of each transmission frame which has no collision with a physical downlink control channel (PDCCH), a cell-specific reference signal (CRS), a physical broadcast channel (PBCH), a primary synchronization signal (PSS) and a auxiliary synchronization signal (SSS).

23. The user equipment according to claim 22, wherein,
when the transmission interval of the auxiliary synchronization signal is 10ms, the auxiliary synchronization signal is located in the 12^{th} or the 13^{th} OFDM symbol in the 0^{th} subframe of each transmission frame, or in the 9^{th}, the 10^{th}, the 12^{th} or the 13^{th} OFDM symbol in the 5^{th} subframe of each transmission frame;
and wherein the synchronizing unit performs symbol synchronization and frame synchronization in accordance with a transmission location of the auxiliary synchronization signal.

24. The user equipment according to claim 22, wherein,
when the transmission interval of the auxiliary synchronization signal is 5ms, the auxiliary synchronization signal is located in the 12^{th} or the 13^{th} OFDM symbol in the 0^{th} subframe of each transmission frame, and in the 9^{th}, the 10^{th}, the 12^{th} or the 5^{th} OFDM symbol in the 5^{th} subframe of each transmission frame; wherein a sequence number of the OFDM symbol used by the auxiliary synchronization signal in the 0^{th} subframe is different from that used in the 5^{th} subframe;
and wherein the synchronizing unit performs symbol synchronization in accordance with a transmission sequence of the auxiliary synchronization signal, and performs frame synchronization in accordance with a location of the auxiliary synchronization signal relative to a location of a synchronization signal of a long-term evolution (LTE) system.

25. The user equipment according to claim 22, wherein,
when the transmission interval of the auxiliary synchronization signal is 5ms, the auxiliary synchronization signal is located in the 12^{th} or the 13^{th} OFDM symbol in the 0^{th} and 5^{th} subframes of each transmission frame;
and the synchronizing unit performs symbol synchronization in accordance with a transmission sequence of the auxiliary synchronization signal, and performs frame synchronization in accordance with different transmission sequences of the auxiliary synchronization signal in the 0^{th} and 5^{th} subframes of each transmission frame.

26. The user equipment according to claim 25, wherein the synchronizing unit uses a PSS sequence in an LTE system as the transmission sequence of the auxiliary synchronization signal in the 0^{th} subframe of each transmission frame, and uses a synchronization signal sequence less correlated to the PSS sequence in the LTE system as the transmission sequence of the auxiliary synchronization signal in the 5^{th} subframe of each transmission frame.

27. The user equipment according to claim 25, wherein the synchronizing unit uses fixed synchronization signal sequences as the transmission sequences of the auxiliary synchronization signals in the 0^{th} and 5^{th} subframes of each transmission frame, respectively, and the transmission sequence of the auxiliary synchronization signal used in the 0^{th} subframe is different from that of the auxiliary synchronization signal used in the 5^{th} subframe.

28. The user equipment according to claim 27, wherein the synchronizing unit selects the transmission sequence of the auxiliary synchronization signal used in the 0^{th} subframe and the transmission sequence of the auxiliary synchronization signal used in the 5^{th} subframe from PSS sequences in the LTE system.

29. A computer-readable program, wherein when the program is executed in a base station, the program enables a computer to carry out the method for enhancing synchronization in a heterogeneous network as claimed in any one of claims 1-6 in the base station.

30. A storage medium in which a computer-readable program is stored, wherein the computer-readable program enables a computer to carry out the method for enhancing synchronization in a heterogeneous network as claimed in any one of claims 1-6 in a base station.

31. A computer-readable program, wherein when the program is executed in user equipment, the program enables a computer to carry out the method for enhancing synchronization in a heterogeneous network as claimed in any one of claims 7-14 in the user equipment.

32. A storage medium in which a computer-readable program is stored, wherein the computer-readable program enables a computer to carry out the method for enhancing synchronization in a heterogeneous network as claimed in any one of claims 7-14 in user equipment.
